Europäisches Patentamt

(19) European Patent Office

Office européen des brevets

(11) Publication number: **0 117 571**
**B1**

# EUROPEAN PATENT SPECIFICATION

(45) Date of publication of the patent specification:
05.11.86

(21) Application number: 84200105.9

(22) Date of filling: 28.01.84

(51) Int. Cl.⁴: **D 03 D 51/34,** B 65 H 63/02,
G 01 H 13/00

(54) A device for controlling the feed state of a textile thread supplied to a weaving machine.

(30) Priority: 24.02.83 IT 1973883

(43) Date of publication of application:
05.09.84 Bulletin 84/36

(45) Publication of the grant of the patent:
05.11.86 Bulletin 86/45

(84) Designated Contracting States:
CH DE FR GB LI SE

(56) References cited:
FR-A-1 443 549
GB-A-2 023 671
US-A-2 928 308
US-A-3 688 958

(73) Proprietor: Barea, Tiziano, Via Dell'Erica 10, Busto
Arsizio Varese (IT)

(72) Inventor: Barea, Tiziano, Via Dell'Erica 10, Busto
Arsizio Varese (IT)

(74) Representative: Giambrocono, Alfonso, Dr. Ing.,
Ing. A. Giambrocono & C. S.r.l. Via Rosolino
Pilo 19/B, I-20129 Milano (IT)

## Description

This invention is concerned with an electronic device for controlling the feed state of a textile thread supplied to a weaving machine, and more particularly a device for sensing the movement of the thread by emitting a signal capable of operating an alarm device and causing the machine to stop in case of breakage or exhaustion of the supplied thread.

As well known, textile threads as continuously or discontinuously supplied to weaving machines may be subjected to breakages or stops of the supply thereof due to any kind of failures. Such a drawback has been hitherto obviated by using so-called "thread fall" devices comprising rocking arms against the action of a spring urging such arms on the thread, constantly sensing the tension thereof and accordingly signalling any reduction in such a tension, indicative of the thread breakage or exhaustion. Practically, these known devices require an accurate calibration for each type of thread, frequent maintenance and have the most serious drawback to cause napping formation due to the thread passage on the control device, which by occluding the thread guide holes, through which a thread would pass, will cause the breakage of the latter; in such a case, the thread would remain embedded in the small hole, whereby the tension applied to the rocking arm would not be reduced and accordingly no signal is given for the supply stop with evident damages to the produced fabric.

Devices suitable to check yarn travel along a path in a textile machine are disclosed in U.S. patent n° 3,361,314 and n° 3,688,958 and in the British patent application n° 202367 1 A: these devices include a sensing element localed adjacent the yarn travel and connected with a piezo-electric pickup or the like suitable to generate electric signals in response to the friction and oscillation of the moving yarn. The piezo-electric pickup is connected to an electronic circuit filtering and amplifying the signal produced by the sensing element: the so amplified electric signal is supplied to an alarm or control apparatus for the machine movement. In these known devices the sensing element consists of a rigid shaped body which is made integral with the piezo-electric pickup or which includes a movable body portion which is oscillatable by the travelling yarn engaging it. As consequence of such a structure these known devices have a low sensitivity and reliability in operation; moreover they can hardly be isolated from the machine frame in order not to be influenced by the frame vibrations and they are markedly sensible to jerks of the running yarn. Finally, known devices of the above referred type are suitable to check the movement of a single yarn at a time.

It is the primary object of the present invention to provide a device of high efficiency and easy and ready installation, adapted for any weaving machine, and particularly capable of signalling with great rapidity the conditions of drawing or stop for the thread being supplied to the weaving machine.

It is another object of the invention to provide a device based on electronic circuits and sensing members or elements for the thread presence, such as to allow an extremely sensitive and effective control of the thread movement state, removing all of the drawbacks inherent to similar devices at present known.

It is still a further object of the invention to provide a device for controlling a plurality of distinct textile threads, of which only one at a time can be drawn from the weaving machine, such threads being counted by the sensing member of the device.

Such objects are achieved by a device for controlling the feed state of a textile thread supplied to a weaving machine or the like, comprising detector consisting of a feeler element in contact with the thread and of a transducer restrained to said feeler element for sensing the thread slide, adapted to convert the mechanical stresses produced thereon by the thread slide or running in an electric signal having voltage and frequency characteristics depending on said stresses, an amplifying circuit having said electric signal applied thereto, an integrating circuit for the values of said amplified electric signal, a comparing circuit for said signal as integrated with a reference voltage, and an actuating circuit controlled by said integrated and compared voltage and adapted to emit an electric signal, as a function of the feed state of said thread, capable of operating an alarm device and causing the machine stop control, characterized by comprising a feeler element in contact with said thread is formed of a tuning fork, of which the prongs are restrained to said transducer.

In order that the structure and features of a device according to the invention be more clearly understood, an embodiment thereof will now be described by way of unrestrictive example, with reference to the accompanying drawings, in which:

Fig. 1 is a perspective view of the device;

Fig. 2 is a block diagram for the electronic circuits forming the electric portion of the device; and

Fig. 3 is a detail view showing the various electronic circuits, as functionally associated with one another, according to the individual blocks shown in the diagram of Fig. 2.

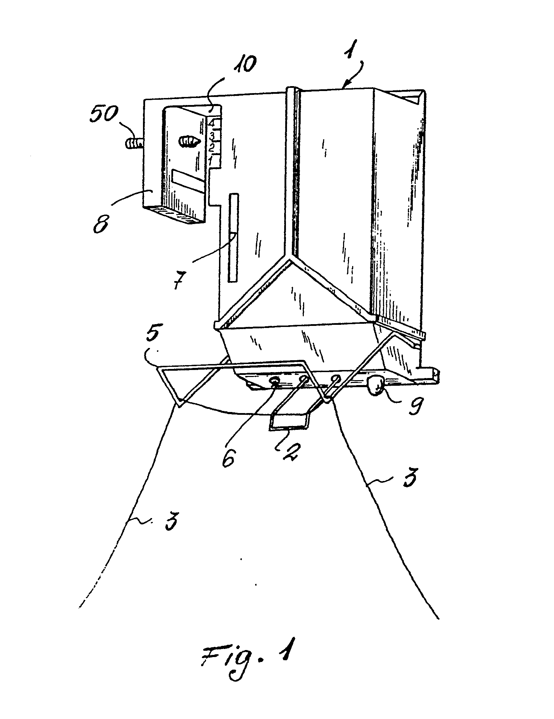

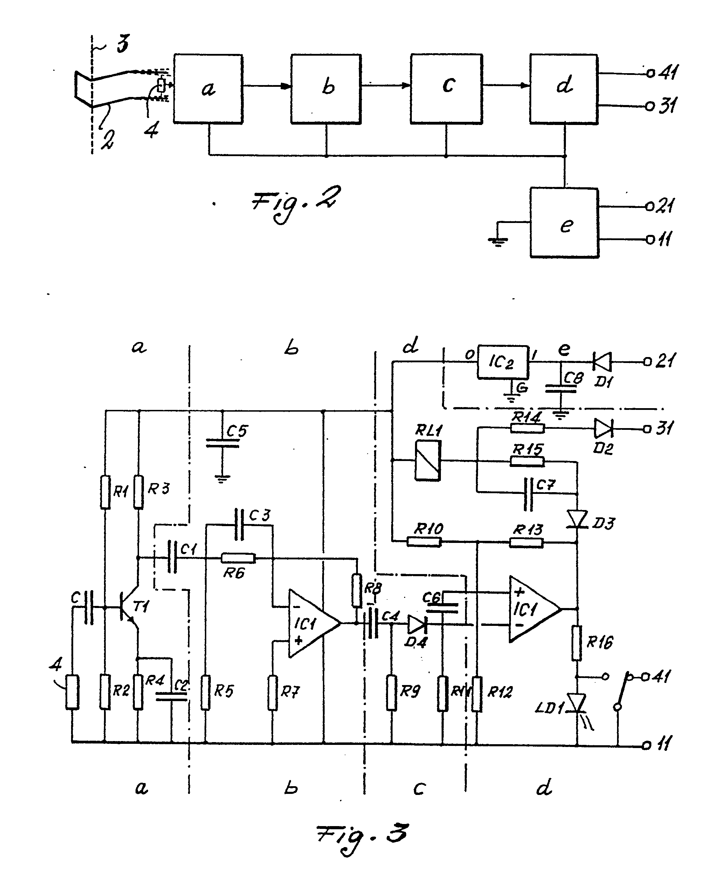

Referring to Fig. 1, a device according to the invention comprises a box-like body 1, in which the electronic circuit shown in Figs. 2 and 3 is enclosed or embedded within a resin. The base of said body 1 has secured thereto a tuning fork 2 having two parallel prongs the cantilever projecting base or central common portion of which is partly downward bent or arcuated to form a sliding saddle for a thread 3 drawn from a supply source (reel or bobbin or the like) and supplied to a weaving machine. The ends of the prongs of the tuning fork are restrained on a sensor or transducer 4 (Fig. 2) within said body, the function of which will be discussed in the following. From said body 1 there also projects a rocking bow or fork 5 having the opposite portion to the hinging or pivoting portion partially arcuated in opposite direction to that of the saddle of the tuning fork. Said bow 5 is opposite to a preloaded spring for maintaining it upward raised in order to retain the thread between the saddle of the tuning fork and that of said bow. The bow spring can be calibrated by a loading screw 6 and an adjustment index 7, so that in case of tearing at the reel or jerk or even anomalous enlargement in the thread, the latter can become clear of the slide saddles, and thereby the device can stop the machine for exhaustion of thread in contact with the tuning fork, as better explained in the following.

Said body 1 has also provided thereon a side bracket 8 with relative clamping screw 50 for use in securing such a body 1 to a weaving machine. A light diode 9 is also provided on said body 1, the lighting of which indicates the thread movement stop, and a connector 10 having four metal pins for electric connection.

A preferred practical embodiment of the circuits forming part of the device is shown in the block diagram of Fig. 2 and in detail in Fig. 3, wherein character reference R denotes resistances, C capacitors and D diodes, while symbol IC1 denotes an operational amplifying circuit, IC2 a stabilizing integrated circuit, T1 a transistor and LD1 a LED (diode emitting light).

Further examining said diagram, it will be seen that the sensor-preamplifier block $\underline{a}$ is fed by a transducer 4, which may be of magneto-dynamic type or forme of a piezoelectric material such as quartz or the like, capable of sensing the oscillations of the tuning fork, the prongs of which (Fig. 2) are restrained to the transducer. As urged by the thread, the tuning fork starts to oscillate transmitting to the tips of the prongs thereof said oscillations as considerably amplified and such as to urge the transducer which, in turn, converts these mechanical oscillations in an electric signal which, as suitably preamplified and frequency filtered is supplied to the next circuit $\underline{b}$ which, in turn, provides for a further and final amplification and selection of the signals at a desired frequency, which are thus enabled to each the circuit of block $\underline{c}$. The latter, which is an integrating circuit, converts the signals in a voltage level which will increase as the frequency and amplitude thereof increase. This voltage is then applied to the input of block $\underline{d}$, the comparing circuit of which compares said voltage level with a reference voltage supplied by block $\underline{e}$, thus signalling whether the voltage level being examined is higher or lower than that of the reference voltage. Thus, if the signal frequency and amplitude is sufficient to obtain from block $\underline{c}$ a higher voltage level than that of the reference voltage, the circuit will not provide for emitting an alarm signal and will keep the relay RL1 on. On the other hand, should such a level be lower, said relay would release and the alarm lamp 9 (diode LD1) will light up signalling, for example, a machine stop provided by said relay.

Since the textile threads to be controlled on a single machine are generally in a great number, when the machine has been stopped, the problem arises to find out which of the many devices installed on the machine has caused the stop. This problem is solved by interlocking "in passing" all of the devices, that is providing a proper signal at the relay input or pin designated at 31 in Figs. 2 and 3. The first device causing the alarm operates its own alarm lamp 9 and by means of a central control locks the other devices, stopping the machine and thus making it easy to identify that device in connection with which the thread breakage has occurred.

The input and output terminals of connector 10, denoted at 11 and 41, respectively correspond to the common and normally closed contact of the actuator relay RL1 which causes the machine stop.

The terminals 21 and 11 respectively represent the supply positive and negative pole of the device, of which said pole 21 is connected to block $\underline{e}$, while pole 11 is direct and common to the entire circuit.

For a still further clearness, the electric circuit will now be explained in further detail.

However, a description is first given about the importance of the tuning fork, which is the first element of the circuit and enables to provide such a sensitivity and reliability in operation that cannot be obtained with other systems. Thus, as shown in Fig. 1, the thread slide on the central common portion of the forks of the tuning fork produces mechanical stresses on said prongs which are converted by the latter in oscillations, which as considerably amplified can be drawn on the tips of said prongs.

The function of the tuning fork provides the device with a considerable sensitivity and owing to its mechanical shape allows such a mounting as to acoustically insulate it from the body or container 1, thus enabling the electronic circuit to sense and then amplify only the tuning fork vibrations (due to the thread passage) and not any other vibrations, thereby permitting a considerable increase in circuit amplification, further improving the apparatus sensitivity. It is another important feature of this tuning fork the reliable sensing of the thread or yarn slide also during considerable tearings and jerks of the running thread. This because, even when moving away from one prong, the thread would run on the opposite prong without any loss of sensitivity owing to the nature of the tuning fork allowing the transfer of an oscillation from one to the other prong.

It is also known that a tuning fork may be shaped according to different shapes, whereby the shape thereof can be adapted to the control requirement to be effected. For example, the tuning fork 2 may have the shape shown in Figs. 1 and 2 where a single thread has to be controlled, or may be differently shaped to accomodate the control of a plurality of textile threads (for example 4 threads) as required, for example, when the machine on which the apparatus is mounted is a so-called "ruling or scoring" type of weaving machine, in which each fall has four threads of different colours, of which only one at a time is supplied to the machine.

In the exemplary embodiment shown in Fig. 3, the block a comprises a sensor and a circuit acting both as a filter and as a preamplifier, of which the former may be represented by a magnetodynamic sensor or transducer of the type as used, for example, in the manufacture of microphones or magnetic phonografic heads, or by a material, such as quartz, piezoelectric, since both of such systems would provide the same result, although with not identical electric characteristics. On the other hand, the electronic circuit through the resistive net comprising the resistors R1, R2, R3 and R4 and the transistor T1 is a normal amplifying circuit of "class A " which, owing to the capacitor C2, enables to provide a high amplification for a range of involved frequencies, and this because such a capacitance, for an electric signal having a higher frequency than the predetermined frequency, reduses its own reactance from a limi close to "infinite" to a value close to "zero".

In input capacitance C de-couples the continuous component of the amplifying circuit from the sensor, and the output signal at the circuit and accordingly at block a is drawn by the collector of said transistor T1 through the capacitance C1 of block b, comprising a further and final amplifying stage of the same frequency range as selected by said block a. Such a stage is represented by an operatioal amplifying circuit which, through the network of resistances and capacitors comprising R6, R7, R8 and C3 acts as an active filter capable not only of selecting the involved frequencies, but also amplifying the latter.

On the other hand, the resistance R7 serves for la polarization of the amplifier OP.

The capacitor C1 and resistance R5 at the input to the active filter operate as passive filter increasing, together with the circuit of block a, which is also an active filter, and the operational amplifier, the slope of the entire system for the selection and amplification of the frequencies of the electric signal.

The block c is an integrating circuit which through the de-coupling capacitance C4 draws the signal as hitherto processed and places it at one end of the polarization resistance R9 and at the anode of diode D4, which de-couples the integrating capacitance C6.

The resistance R11 assures the discharge of the integrated voltage level in case of instantaneous or gradual blocking of the signal and, if required, also determines through the time constant $R_{11}$-$C_6$, some delay to the operation of the alarm signal and resulting de-energization of the relay RL1. The attained voltage level, placed at one end of capacitor C6, is sensed by the second half of the operational amplifier IC1 through the inverting input. The reference to such a level is placed instead at the not inverting input and is supplied by the voltage division carried out by the resistances R10-R12 and R13, which together with the operational amplifier form a classic circuit, commonly referred to as Smith's trigger.

When the positive voltage level, integrated by C6, is higher than the reference level, the output of the operational amplifier will be negative; on the other hand, when such a level is negative relative to reference, the output will be positive. If negative, the output of the operational amplifier will supply the relay RL1 through the directly polarized diode D3 and resistance R15, but when positive, said diode D3 will be inversely polarized and will not supply said relay RL1. The resistance R15 and capacitor C7 only serve to limit the consumption of relay RL1 when energized by the pulse provided from C7, at the end of which the resistance R15 will maintain said relay at attracted state, supplying it with a slightly higher voltage than the release voltage of the relay.

The resistance R14 and diode D2 are used for providing the inhibition input of relay RL1; thus, should the ground potential be placed at the pin-input 31 of the circuit, the diode D2 is directly polarized and together with said resistance R14 will maintain said relay RL1 energizes (even when the machine is stopped) and the voltage on the cathode of diode D3 (output of IC1) should become positive. In case of de-energized relay, that is under alarm condition, the current to the LED diode LD1 is supplied by the resistance R16 connected to the output of the operational amplifier IC1. The stabilized positive supply is provided by the integrated stabilizer IC2. The matter provides for adjusting the positive voltage applied to the connector pole 21 which, overcome the de-coupling diode D1 among a plurality of devices and being only rectified, is levelled by C8 and applied to the input of IC2; therefore, at the output of the latter there will be provided the stabilized voltage supplying both the integrated circuit IC1, and the selective preamplifier of block a, and the relay RL1.

The circuit of Fig. 3 may be implemented by components having the following values: R1 = 220 Kohms; R2, R3, R4, R5, R9, R10 and R13 = 100 Kohms; R6 and R8 = 1Mohm; R7 = 470 Kohms; R12 = 4.7 Kohms; R14, R15 and R16 = 2.2 Kohms; C1, C2 and C6 = 10 μF; C3 and C4 = 1 μF; C5 and C7 = 10 μF; C8 = 100 μF, 50 V; D1, D2, D3 and D4 = 1N4148; the integrated circuit IC1 manufactured by Fairchild is marketed as μ 798TC; the integrated circuit IC2 is marketed as 78L24AWC; and the transistor TR1 is of BC108C type.

The embodiment of the electronic circuit above detailedly described with reference to Figs. 2 and 3 is given merely by way of example. Indeed said circuit may be different from that one which has been so exemplified: for instance, it might be made in accordance with the teachings of the U.S. patents n° 3,361,314 and n° 3,688,958 or of the British patent application n° 2023671 A.

From the foregoing it will be readily seen that the control device according to the invention eliminates any drawback in supply, since the control is effective on the thread movement and not on the tension thereof it is obviously apparent that the formation of slubbing or any other drawback would not affect the stop reliability of the electronic circuit. Therefore, it clearly appears that the simplicity and versatility of the described device allows the use thereof on any type of weaving machine where it is required to control the start, run or stop of a thread supplied to the machine.

## Claims

1. A device for controlling the feed state of a textile thread supplied to a weaving machine or the like, comprising a detector consisting of a feeler element in contact with the thread and of a transducer restrained to said feeler element for sensing the thread slide and adapted to convert the mechanical stresses thereon produced by the thread slide in an electric signal having voltage and frequency characteristics depending on said stresses, an amplifying circuit to which said electric signal is supplied, an integrating circuit for the values of said amplified electric signal, a comparing circuit of said integrated signal with a reference voltage, and an actuating circuit controlled by said integrated compared voltage for emitting an electric signal, as a function of the feed state of said thread, capable of operating an alarm device and determining the machine stop control, characterized in that said feeler element in contact with the thread is formed of a tuning fork the prongs of which are restrained to said transducer.

2. A device as claimed in Claim 1, characterized in that at least one of the prongs of said tuning fork, at a position close to the central common portion of its forks and remote from said transducer, has at least a portion thereof which are bent to form a sliding saddle for the thread.

3. A device as claimed in Claim 2, characterized in that both the prongs are bent to form a sliding saddle for the thread.

4. A device as claimed in Claims 1 to 3, characterized in that said transducer is restrained to the free ends of the prongs of said tuning fork.

5. A device as claimed in Claims 2 to 4, characterized in that it comprises at least one bow or fork oscillating against the action of calibratable springs, which slightly presses said thread on the saddle of the prongs of the tuning fork.

6. A device as claimed in Claims 1 to 5, characterized in that said transducer comprises a magneto-dynamic element or piezoelectric material.

## Patentansprüche

1. Vorrichtung zur Überwachung des Zufuhrzustandes eines textilen Garnes zu einer Webmaschine o.dgl., umfassend einen Detektor, bestehend aus einem Tasterelement in Kontakt mit dem Garn und aus einem an dem Tasterelement festgehaltenem Wandler, zum Abfühlen des Garngleitens, der geeignet ist, die mechanischen Spannungen, die daran durch das Garngleiten erzeugt werden, in ein elektrisches Signal umzuwandeln, das Spannungs- und Frequenzcharakteristika hat, die von den erwähnten Spannungen abhängen, eine Verstärkungsschaltung, welcher das elektrische Signal zugeführt wird, und eine Integrationsschaltung für die Werte des verstärkten elektrischen Signals, eine Vergleichsschaltung des integrierten Signals mit einer Bezugsspannung, und eine Betätigungsschaltung, die durch die integrierte verglichene Spannung gesteuert wird, und zwar zum Aussenden eines elektrischen Signals als Funktion des Zufuhrzustandes des Garns, welches in der Lage ist, eine Alarmeinrichtung zu betätigen und die Stoppkontrolle der Maschine zu bestimmen, dadurch gekennzeichnet, daß das in Kontakt mit dem Garn befindliche Tasterelement von einer Stimmgabel gebildet ist, deren Zinken an dem Wandler festgehalten sind.

2. Vorrichtung nach Anspruch 1, dadurch gekennzeichnet, daß wenigstens einer der Zinken der Stimmgabel in einer Position, die dem mittigen gemeinsamen Teil ihrer Gabeln nahe und entfernt von dem Wandler ist, wenigstens einen Teil desselben hat, der zur Ausbildung eines Gleitsattels für das Garn gebogen ist.

3. Vorrichtung nach Anspruch 2, dadurch gekennzeichnet, daß die beiden Zinken zur Ausbildung eines Gleitsattels für das Garn gebogen sind.

4. Vorrichtung nach den Ansprüchen 1 bis 3, dadurch gekennzeichnet, daß der Wandler an den freien Enden der Zinken der Stimmgabel festgehalten ist.

5. Vorrichtung nach den Ansprüchen 2 bis 4, dadurch gekennzeichnet, daß sie wenigstens einen Bogen oder eine Gabel umfaßt, der bzw. die gegen die Wirkung von eichbaren Federn schwingt, welcher bzw. welche das Garn leicht auf den Sattel der Zinken der Stimmgabel drückt.

6. Vorrichtung nach den Ansprüchen 1 bis 5, dadurch gekennzeichnet, daß der Wandler ein magnetodynamisches Element oder piezoelektrisches Material umfaßt.

## Revendications

1. Dispositif pour contrôler la présence d'un fil de trame qui alimente une machine à tisser ou analogue, comprenant un détecteur consistant en un élément palpeur en contact avec le fil et un transducteur retenu sur ledit palpeur, pour détecter le glissement du fil et apte à transformer les sollicitations mécaniques exercées sur lui par le glissement du fil en un signal électrique ayant des caractéristiques de tension et de fréquence fonction desdites sollicitations, un circuit d'amplification alimenté par ledit signal électrique, un circuit intégrant les valeurs dudit signal amplifié, un circuit comparant ledit signal amplifié à une tension de référence, et un circuit d'actionnement commandé par ladite tension intégrée et comparée qui émet un signal électrique fonction de la présence dudit fil et capable de faire fonctionner un dispositif d'alarme et de commander l'arrêt de la machine, caractérisé en ce que ledit élément palpeur en contact avec le fil est constitué par un diapason dont les branches sont fixées sur ledit transducteur.

2. Dispositif selon la revendication 1, caractérisé en ce qu'au moins une des branches dudit diapason possède, près de la partie centrale commune aux branches et éloigné dudit transducteur, au moins une partie recourbée pour former une selle sur laquelle glisse le fil.

3. Dispositif selon la revendication 2, caractérisé en ce que les deux branches sont recourbées pour former une selle sur laquelle glisse le fil.

4. Dispositif selon les revendications 1 à 3, caractérisé en ce que ledit transducteur est fixé aux extrémités libres des branches du diapason.

5. Dispositif selon les revendications 2 à 4, caractérisé en ce qu'il comprend au moins une recourbée ou fourche oscillant contre l'action de ressorts calibrables et qui applique légèrement ledit fil sur la selle des branches du diapason.

6. Dispositif selon les revendications 1 à 5, caractérisé en ce que ledit transducteur comprend un élément magnétodynamique ou en matière piézoélectrique.

Fig. 1

Fig. 2

Fig. 3